Europäisches Patentamt

European Patent Office

Office européen des brevets

(11) Veröffentlichungsnummer: **0 355 923**
**A2**

(12) # EUROPÄISCHE PATENTANMELDUNG

(21) Anmeldenummer: **89202118.9**

(51) Int. Cl.⁴: **G02B 6/255**

(22) Anmeldetag: **22.08.89**

(30) Priorität: **23.08.88 DE 3828553**

(43) Veröffentlichungstag der Anmeldung:
**28.02.90 Patentblatt 90/09**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Burger, Walter**
**Kölner Strasse 516**
**D-5067 Kürten-Herweg(DE)**
Erfinder: **Ditscheid, Hans-Leo**
**Am Birkenbusch 1**
**D- Bergisch Gladbach 2(DE)**
Erfinder: **Schmitz, Manfred**
**Germaniastrasse 152**
**D-5000 Köln 91(DE)**
Erfinder: **Tröndle, Hubert**
**Hauptstrasse 22**
**D-5206 Neunkirchen-Seelscheid(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Spleissverbindung zweier optischer Kabel.**

(57) Die Erfindung betrifft eine Spleißverbindung der Enden zweier optischer Kabel, deren Zugentlastungselemente sich im Verbindungsbereich überlappen und kraftschlüssig miteinander gekoppelt sind. Im Bereich der Spleißverbindung erhält man nahezu die mechanische Eigenschaft des Kabels, wenn die Zugentlastungselemente im Überlappungsbereich miteinander verklebt sind.

# Spleißverbindung zweier optischer Kabel

Die Erfindung bezieht sich auf eine Spleißverbindung der Enden zweier optischer Kabel, deren Zugentlastungselemente sich im Verbindungsbereich überlappen und kraftschlüssig miteinander gekoppelt sind.

Bei einem nach der DE-C 30 11 429 bekannten Anordnung dieser Art ist jeweils ein Teil der Bewehrung des einen Kabels auf dem Mantel des anderen Kabels festgeklemmt. Im Bereich der Klemmstellen sind die LWL durch starre Hülsen geschützt. Zum Schutz der Spleißstellen sind die beiden Kabelenden in einem starren Rohr und einem darüber befindlichen Schrumpfschlauch untergebracht. Eine solche starre Spleißmuffe bildet eine störende Diskontinuitätsstelle im Kabelverlauf, welche beim Verlegen oder Aufrollen des Kabels hinderlich ist.

Der Erfindung liegt die Aufgabe zugrunde, die Spleißverbindung der eingangs genannten Art derart zu gestalten, daß sie angenähert die mechanischen Eigenschaften des Kabels aufweist. Insbesondere soll die Verbindungsstelle flexibel sein, einen allenfalls geringfügig vergrößerten Durchmesser aufweisen und Zugbelastungen übertragen und die LWL sowie deren Verbindungsstellen schützen können.

Die Lösung gelingt dadurch, daß die Zugentlastungselemente im Überlappungsbereich miteinander verklebt sind.

Bei der erfindungsgemäßen Anordnung sind keine starren Klemm- oder Schutzelemente erforderlich. Die kraftschlüssige Kopplung der Zugentlastungselemente beider Kabelenden erfolgt über flexible Klebeverbindungen, so daß bei entsprechend langem Üüberlappungsbereich große Zugkräfte übertragbar sind. Bei einer Überlappungslänge von 25 cm konnten 70 % der der Belastbarkeit der Zugentlastungselemente entsprechenden Kraft übertragen werden.

Als besonders vorteilhaft hat sich erwiesen, daß die Zugentlastungselemente beider Kabel in Teilelemente aufgeteilt sind, welche um die Kabelseele derart verteilt sind, daß ein Teilelement des einen Kabels jeweils neben einem Teilelement des anderen Kabels liegt. Die übertragbare Kraft nimmt mit der Anzahl der aufgeteilten Teilelemente zu. Viele Teilelemente lassen sich gleichmäßiger und mit geringerer Schichtdicke verteilen.

Als besonders einfach handhabbare Lösung hat sich erwiesen, daß der Kleber im Überlappungsbereich als Schmelzkleber, insbesondere in Form von Schmelzkleberschläuchen um die einzelnen Teilelemente der Zugentlastungselemente aufgebracht ist.

Eine vorteilhafte Lösung ist dadurch gekennzeichnet, daß aus benachbarten Teilelementen beider Kabel gebildete Paare von einem Schrumpfschlauch umgeben und durch dessen thermische Schrumpfung aneinander gedrückt sind. Der die Teilelemente umgebende Schmelzkleber schmilzt beim thermischen Aufschrumpfen der die Paare umhüllenden Schrumpfschläuche.

Mit dieser Lösung wird erreicht, daß der Schmelzkleber beim Erwärmen der Schrumpfschläuche kontrolliert aufgeschmolzen wird und dabei auch faserige Zugentlastungselemente in erforderlichem Maße durchdringt. Dazu trägt unterstützend auch die Schrumpfkraft eines äußeren Schrumpfschlauches wesentlich bei, welcher die gesamte Spleißverbindung beider Kabel umgibt.

Damit an der Stelle der Spleißverbindung kein Wasser in das Kabel eindringen kann, ist vorgesehen, daß der Schrumpfschlauch über einen Kleber wasserdicht mit den Außenmänteln beider optischer Kabel verbunden ist.

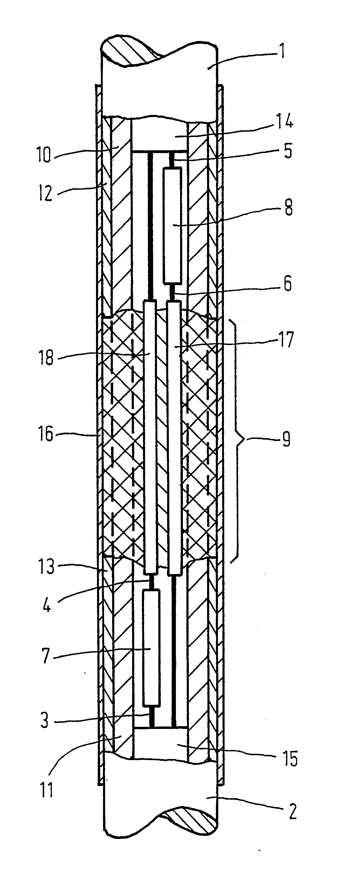

Die Erfindung wird anhand eines in der Zeichnung dargestellten vorteilhaften Ausführungsbeispiels näher erläutert.

Die Figur zeigt eine erfindungsgemäß gestaltete Spleißverbindung im Längsschnitt.

In der Figur sind die Enden zweier optischer Kabel 1 und 2 miteinander verbunden. Die Schweißstellen der LWL 3 und 4 einerseits sowie 5 und 6 andererseits sind durch Spleißhülsen 7 bzw. 8 verstärkt. Die Bewehrungselemente beider Kabel 1 und 2 sind als Glasfaserschichten 10 und 11 ausgebildet, welche im Überlappungsbereich 9 jeweils in eine Mehrzahl von um die Kabelseele verteilten Teilelementen aufgeteilt wurden. Paare von benachbarten und jeweils mit einem Schmelzkleberschlauch umgebenen Teilelementen beider Kabel wurden durch thermische Schrumpfung eines die Paare umhüllenden Schrumpfschlauches aneinandergedrückt, wobei der Schmelzkleber erweichen konnte. Der Kleber dringt dabei auch zwischen die Fasern der Teilelemente, so daß über die Verklebungen hohe Zugkräfte übertragen werden können. Durch Verlängerung des Überlappungsbereichs 9 können die übertragbaren Zugkräfte erforderlichenfalls vergrößert werden.

Die Außenmäntel 12 und 13 der Kabel 1 und 2 wurden so weit entfernt, daß sie vor dem Überlappungsbereich 9 enden. Die Innenmäntel 14 und 15 wurden nach dem Längseinschneiden der Endbereiche der Außenmäntel 12 und 13 um ein weiteres Stück verkürzt, so daß für die Beweglichkeit der Spleißhülsen 7 und 8 Platz verfügbar ist. Da die Spleißstellen der LWL und damit die Spleißhülsen 7 und 8 an verschiedenen Seiten des Überlappungsbereichs angeordnet sind, wird der verfügbare Freiraum besonders gut genutzt.

Damit die Längsbeweglichkeit der LWL 4 und 6 nicht vom Kleber beeinträchtigt wird, sind die LWL dort gleitfähig in dünnen wärmefesten Kunststoffhülsen 17 und 18 geführt, welche auch den vom äußeren Schrumpfschlauch 16 herrührenden Preßdruck abfangen.

Der Durchmesser der Spleißverbindung ist nur geringfügig größer als derjenige der Kabel 1 und 2. Die für die Herstellung der Spleißverbindung verwendeten Elemente sind elastisch, so daß dort die Biegbarkeit des gespleißten Kabels erhalten bleibt. Die erfindungsgemäße Spleißverbindung wirkt sich weder beim Aufrollen des Kabels noch bei seiner Verlegung störend aus. Eine geringfügige Verdickung infolge des Schrumpfschlauches erlaubt das Erkennen der Spleißverbindungsstelle im Kabelverlauf, so daß in diesem Bereich eine vorsichtigere Handhabung ermöglicht wird.

Wenn eine größere Verdickung in Kauf genommen werden darf, kann unter dem Schrumpfschlauch eine Verstärkungshülle aufgebracht werden, welche vorteilhaft aus dem gleichen Werkstoff wie die Außenmäntel 12 und 13 besteht und wasserdicht mit diesen verschweißt oder verklebt wird.

**Ansprüche**

1. Spleißverbindung der Enden zweier optischer Kabel, deren Zugentlastungselemente sich im Verbindungsbereich überlappen und kraftschlüssig miteinander gekoppelt sind,
dadurch gekennzeichnet, daß die Zugentlastungselemente (10,11) im Überlappungsbereich (9) miteinander verklebt sind.

2. Spleißverbindung nach Anspruch 1,
dadurch gekennzeichnet, daß der Überlappungsbereich (9) eine Länge von mehr als 200 mm hat.

3. Spleißverbindung nach Anspruch 1 oder 2,
dadurch gekennzeichnet, daß die Zugentlastungselemente (10,11) beider Kabel in Teilelemente aufgeteilt sind, welche um die Kabelseele derart verteilt sind, daß ein Teilelement des einen Kabels jeweils neben einem Teilelement des anderen Kabels liegt.

4. Spleißverbindung nach einem der Ansprüche 1 bis 3,
dadurch gekennzeichnet, daß der Kleber im Überlappungsbereich (9) als Schmelzkleber und insbesondere als Schmelzkleberschlauch um die einzelnen Teilelemente der Zugentlastungselemente (10,11) aufgebracht ist.

5. Spleißverbindung nach Anspruch 3 oder 4,
dadurch gekennzeichnet, daß aus benachbarten Teilelementen beider Kabel gebildete Paare von einem Schrumpfschlauch umgeben und durch dessen thermische Schrumpfung aneinander gedrückt sind.

6. Spleißverbindung nach einem der Ansprüche 1 bis 5,
dadurch gekennzeichnet, daß die Spleißstellen (7,8) der einzelnen Lichtwellenleiterpaare (3,4 bzw. 5,6) außerhalb des Überlappungsbereichs angeordnet sind.

7. Spleißverbindung nach einem der Ansprüche 1 bis 6,
dadurch gekennzeichnet, daß die Spleißstellen (7,8) beidseitig des Überlappungsbereichs (9) verteilt sind.

8. Spleißverbindung nach einem der Ansprüche 1 bis 7,
dadurch gekennzeichnet, daß die LWL (4,6) im Überlappungsbereich (9) in auf ihnen gleitfähigen Hülsen (17,18) geführt sind.

9. Spleißverbindung nach Anspruch 8,
dadurch gekennzeichnet, daß sie durch einen äußeren Schrumpfschlauch (16) abgedeckt ist.

10. Spleißverbindung nach Anspruch 9,
dadurch gekennzeichnet, daß der Schrumpfschlauch (16) über einen Kleber wasserdicht mit den Außenmänteln (12,13) beider optischer Kabel (1,2) verbunden ist.